**Europäisches Patentamt**

**European Patent Office**

**Office européen des brevets**

(11) Publication number: **0 047 612**
**A1**

## (12) EUROPEAN PATENT APPLICATION

(21) Application number: **81303927.8**

(22) Date of filing: **27.08.81**

(51) Int. Cl.³: **G 01 N 21/88**

(30) Priority: **04.09.80 GB 8028653**

(43) Date of publication of application: **17.03.82**
**Bulletin 82/11**

(84) Designated Contracting States: **AT BE DE FR GB IT NL SE**

(71) Applicant: **IMPERIAL CHEMICAL INDUSTRIES PLC, Imperial Chemical House Millbank, London SW1P 3JF (GB)**

(72) Inventor: **Cramp, John Harry William, St. Cloud 37 Eccleston Gardens, St. Helens Merseyside, WA10 3BL (GB)**
Inventor: **Noakes, Timothy James, Half Acre 7 Hartford Avenue, Wilmslow Cheshire, SK9 6LP (GB)**

(74) Representative: **Hall, David Brian et al, Imperial Chemical Industries PLC Legal Department: Patents Thames House North Millbank, London SW1P 4QG (GB)**

(54) **Apparatus for detecting flaws in internal coatings on moving open-mouth containers.**

(57) The apparatus comprises a light source for illuminating the inside surface of an open-mouth container in a predetermined position, and an array of photosensitive devices positioned to receive light reflected out of the container. Signals from these devices are then each compared with a reference signal representing that for a flawless container. By this apparatus, containers such as beer cans having an internal organic coating can be inspected for coating flaws while moving rapidly on a production line, e.g. at a typical rate of 800 cans per minute, and the positions of detected flaws indicated.

EP 0 047 612 A1

## APPARATUS FOR DETECTING FLAWS IN INTERNAL
## COATINGS ON MOVING OPEN-MOUTH CONTAINERS

The invention relates to the detection of flaws in coatings on the internal surfaces of open mouth containers.

Metallic containers are often protected against corrosion by a chemically inert internal coating, and it is clearly important to avoid flaws in such coatings or corrosion may start to occur. For example, beer cans formed as open mouth containers deep drawn from electrolytic tinplate, are coated with an organic resin before their open mouths are closed by end caps. Other coatings applied to containers include non-stick coatings on pans, barrier coatings on plastics containers, and decorative coatings on a variety of containers such as household tableware and casseroles. The coated containers may travel along the production line at a considerable rate, a beer can line typically exceeding 800 cans per minute, for example. This makes quality control by visual inspection of coatings impracticable.

Coatings on films and sheet materials can be readily monitored by automatic means while they are still moving, by continuously comparing the intensities of two beams transmitted through the coating, possibly with reflection at the substrate, one of the beams being strongly absorbed by the coating while the other, a reference beam, is not. However, monitoring of discrete containers moving rapidly along a conveyor presents a much more complex problem because of the constantly changing picture presented to any static monitoring system as the empty conveyor, the container rim (which may not be coated), the coated interior of the container, the container rim again and finally the empty conveyor all present themselves in turn, in varying proportions. Moreover, because of the three dimensional nature of the container coatings as they cover the base in one plane and the sides at angles to the base plane, known systems for detecting flaws in flat coatings are not readily useable for identifying the positions of flaws in container coatings.

According to the present invention, an apparatus is provided for detecting flaws in coatings on internal surfaces of moving open-mouthed containers, comprising means to detect the presence of a container in a predetermined testing position; a light source to illuminate the internal coating when the container is in the testing position, with light comprising at least one wavelength which is reflected from a coated surface to a different extent than from an uncoated surface; an array of photosensitive devices positioned to receive light reflected out of the container through the open mouth thereof and to give an analogue signal in response to light thus received by each device; and processing means activated by the detecting means to scan the analogue signals from the photosensitive devices when a container is in the testing position, to compare the values of those analogue signals individually with predetermined values, and to give an output signal dependent on the comparison thereby obtained.

The shape of the containers may vary from the tall cylindrical shape of beer cans, for example, to the much flatter shape of a non-stick frying pan. While the containers must have an open mouth when passing through the present apparatus in order to allow light to enter and be reflected back out again, they may, again like the beer cans, be thereafter sealed to form a closed container before finally being used.

The means for detecting the presence of a container in the testing position is preferably an optical system comprising a light beam traversing the path of the container and a detector for the light beam which provides an electrical signal which changes when the light beam is broken. This form of detector can provide very quick and accurate identification of the presence of a container. However, other means, such as proximity switches or even mechanical limit switches, may also be effective where the required reaction times are appropriate to the capabilities of the alternative means selected.

The source may comprise one or more light-emitting devices, but except where the containers are particularly large, a single light-emitting device located centrally with respect to the testing position and emitting a divergent beam, is generally preferred. Laser diodes are particularly suitable for this purpose, although tungsten filament bulbs, Nernst glowers, light emitting diodes or lasers may also be used, depending on the requirements of the particular application. The laser may require the addition of a diverging lens, but the other three devices normally emit divergent rays, e.g. as a divergent cone.

For successful operation of the apparatus, the light must be reflected back out of the container by the coated surface to a different extent than that reflected back by the uncoated surface. Thus, for example, for detecting flaws in a white coating on a black or transparent container, white light may be used. Similarly white light may also be used where a dark coating is applied to a shiny or light coloured substrate. However, for transparent coatings on reflective surfaces, the light should be of a wavelength which is strongly absorbed by the coating. The light may include wavelengths within the infra-red, visible or ultra-violet regions according to the above requirements. However, where possible we prefer to use light consisting essentially of wavelengths within the infra-red. Such radiation is less damaging to the human retina than the shorter wavelength radiation, is less prone to scatter by rough surfaces, and most of the coating resins currently used have good absorption in the infra-red.

Where the coating resin does not have a strong absorption band at a convenient wavelength, an additive which does have a suitable absorption band may be added to the resin before the coating operation is carried out.

The photosensitive devices are preferably photosemiconductors where radiation of less than 5 μm is used, but pyroelectric devices are preferred for longer wavelengths. Alternative devices include photosensitive resistors and photoacoustic devices.

The array of photosensitive devices preferably covers a circular area when the containers are cylindrical or otherwise have a circular mouth through which the coating is viewed. The light source is then conveniently mounted in the centre of the circular array. Both the array of photosensitive devices and the light source, are preferably moveable in respect of their distance from the conveyor belt or other means used for moving the containers. A common apparatus may then be useable for a variety of shapes and sizes of containers.

Light entering the container may be reflected from more than one part of the internal surface before emerging through the open mouth. Hence where there is a flaw, light reflected from the flaw may be on its first, second, third or even later reflection in some cases, and so will be reflected by the flaw at different angles. There is also usually some scattering of the light, although this may be less troublesome when infrared radiation is used. However, these various characteristics all add up to give a diffuse picture of the coating. This has an advantage in that it enables even a small flaw to be detected, whereas a single specular reflection might pass between adjacent spaced detectors and be undetected. Moreover, although the analogue signals from the array do not directly provide a picture of the coating due to the multiple reflections etc., they can still be interpreted to give an indication of the position of any flaws detected. To interpret the results graphically, even with computerised assistance, can be tedious and uncertain, and we prefer to work out the interpretation of the signals in a practical manner by presenting standard containers with flaws in known positions. This can be done surprisingly quickly and with a small number of samples by presenting each sample in a number of different orientations.

The processing means preferably comprises a multiplexer arranged to sample in turn each analogue signal and to provide a pulsed output signal wherein the pulses correspond to specific analogue signals whose originating devices are identifiable by the processing means. In this way the signals representing the amount of light received by the photosensitive device may be separated in time rather than in space, and so may be compared in turn with the predetermined values. The multiplexer may be provided for example as a separate microchip, as a microchip combined as an integral part of the array, or it may be incorporated as part of a subsequent computerised stage.

How the multiplexed pulses may be most conveniently evaluated depends on how much information on the flaws is required. For example, if the apparatus is simply to provide a reject or accept signal as appropriate, e.g. to activate means for removing rejected cans from a production line, this function can simply and cheaply be carried out by a programmable microchip. However, the present apparatus lends itself also to the ready provision of considerable information about the container flaws. The array, when suitably calibrated, can give an indication of where the flaws are occurring on the container, and by using a more powerful tool such as a desk-top computer, automatic feed-back to the coating apparatus can be provided, as can also a statistical analysis of how many flaws occur and how bad they are, where they occur and when (e.g. on start up or after prolonged running etc.). This is all information which is useful to a production engineer. The apparatus may, of course, also use part of a more powerful computing means where this is available.

The apparatus is preferably programmed such that it may be recalibrated, e.g. when the size or shape of the containers is changed or a new batch of coating material is used, by passing through the reading position at least one reference container whose coating is known to be acceptable. The analogue signals of the photosensitive devices for subsequent containers are then compared with those for the reference container, predetermined tolerance being introduced as appropriate. It is further preferred that the apparatus be recalibrated by reference to an average of signals derived from a plurality of reference containers.

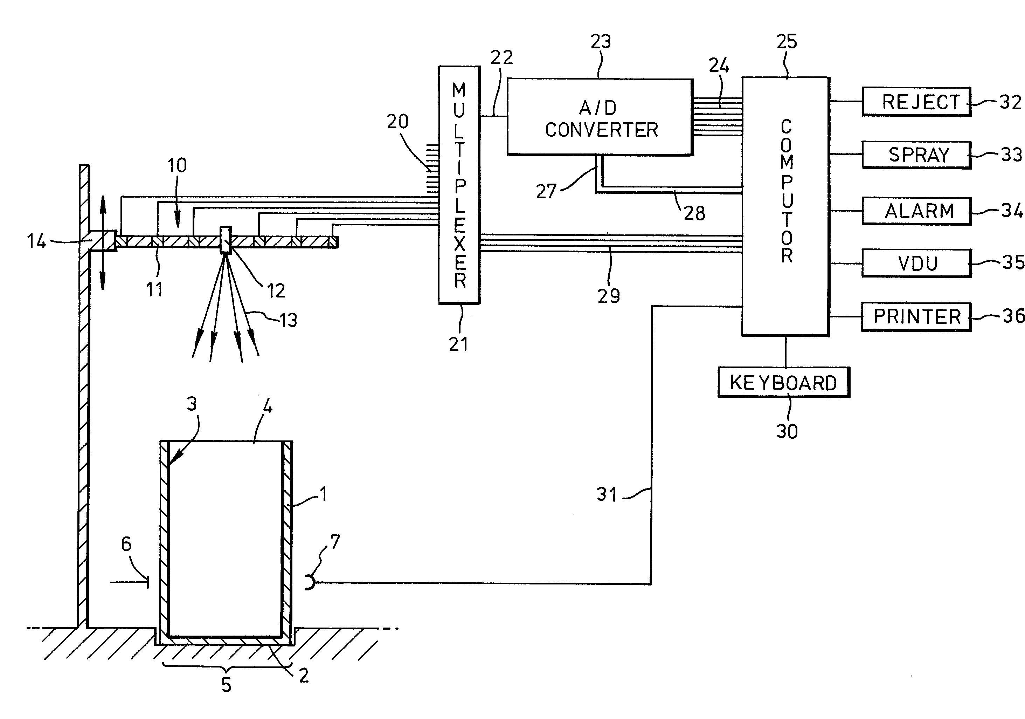

The invention is illustrated by the following description of a specific embodiment thereof, shown in the accompanying drawing which is a diagrammatic representation of an automatic quality-control apparatus on a coating line of a beer can manufacturing plant.

A beer can 1 (shown in section) is travelling along a conveyor 2 after having been sprayed with a protective organic coating 3 on its internal surface. At this stage the can still has an open mouth 4, and has reached a testing position 5 in which the coating is to be tested for flaws. Across the testing position is an optical can-detector, having a light source 6 and sensor 7. Immediately above the can in the testing position is an array 10 of sixteen photodiodes 11. These are arranged around a central helium-neon laser 12 providing radiation in the infra-red at a wavelength of 3.39 μm to which the photodiodes devices can respond. The radiation passes through a diverging lens to emerge as cone 13. The array is mounted on a frame 14 so as to be adjustable for height. This is to enable the apparatus to be used for cans of differing height and/ or diameter.

Sixteen parallel outputs 20 from the array 10 are taken to an analogue multiplexer 21, whose output is fed by a single line 22 to an analogue/digital converter 23 of the successive approximation type. This in turn has eight data lines 24 providing input to a computer 25. The converter is controlled by the computer, having a start-to-convert line 27 and an end-of-convert line 28. The multiplexer is also controlled by the computer and synchronised with the other operations, using four parallel lines 29.

The computer 25 is controlled from a keyboard 30, and has a further input 31 from the can detector 6, 7. Outputs from the computer go to a can-rejecting mechanism 32, a spray control 33, an alarm 34, a visual display unit 35 and a printer 36.

In the manufacturing plant the beer cans are deep drawn from tinplate and then sprayed with a protective organic coating. The spray (not shown in the drawing) is controlled by the spray control 33. On leaving the spraying position, the can 1 moves along the conveyor 2 and passes right through the testing position 5 shown in the drawing, without stopping. Above the testing position, the laser 12 emits its cone 13 of infra-red radiation continuously, and the photodiodes 11 in the array 10 pick up reflections of that light from whatever is below the array. The sixteen signals from the diodes are fed in parallel to the multiplexer 21. When each can reaches the testing position, the can detector beam is broken, and the change in output of the detector triggers the computer into a reading mode.

Using the four parallel lines 29 the computer 25 selects one of the sixteen inputs 20 to the multiplexer 21, and the selected analogue signal is transferred to the converter 23, which in turn is started by the computer using the start-to-convert line 27. After a time interval of about 25 μs, the computer receives an end-of-convert signal along the other line 28, and reads what is on the end of the data lines 24. The computer then selects the next analogue input, thereafter repeating the process until all sixteen inputs have been converted.

All sixteen signals, now in digital form, are compared in the computer with a predetermined set of reference values. If they are within preset tolerances of those values, the can is allowed to continue to the filling lines. If a flaw causes it to be outside the tolerances for any one signal, the reject mechanism 32 is instructed to remove the can from the line.

The coating applied to the can is one which absorbs strongly at a wavelength emitted by the laser.

Where the coating is good, only a low level of the light is reflected back to the sensors. Where the coating is missing, the tinplate reflects back most of the light and such areas are seen by the array as brighter spots. More than one sensor will generally be affected, but the computer is programmed as described hereinabove to interpret those affected signals, and thereby determine the area of the coating containing the flaw. When such flaws occur repeatedly in the same area of the surface or when the coating is outside the tolerances as being too thick, the computer provides feedback to the spray control 33, as required to correct the deficiency. When deficiencies are persistent, the computer sounds the alarm 34. Details of the flaws detected are stored by the computer and this information is retrievable via the visual display unit 35 or printer 36.

The computer is set up initially by pressing a predetermined key on the keyboard 30 and passing through the reading position, at normal line speed, ten cans whose surface coatings are known to be substantially without flaws. This is an arbitrary number which this computer has been programmed to accept, but a different number of samples may be equally effective with appropriate programs. The ten readings are then averaged to give the predetermined reference values against which subsequent signals may be compared, and the distribution about the average is used as one factor in determining the acceptable tolerance. This does, however, generally need to be modified by a factor determined by the stringency of the requirements.

In the specific embodiment described, the analogue signals were read in sequence as the can continued to move through the testing position. This was possible for that particular application because the time taken to sample all sixteen signals was very small compared with the time taken by the can to move a significant distance through the testing position. However, if it were felt necessary to have simultaneous sampling, for example where the line speed is much higher than that described above, an array of sample and hold amplifiers may be provided before the multiplexer, i.e. one for each analogue signal.

It may also be helpful to modify the interface in areas of high electrical noise. Under such conditions it can be advantageous to use an array of analogue-to-digital converters, preferably of the integrating rather than the tracking variety. This method provides simultaneous conversion and also enables simultaneous sampling to be effected.

The apparatus of the specific example described above is designed to detect flaws in coatings covering the whole internal surface of the can. However, other applications wherein only a portion of the surface is to be covered, e.g. with an annulus of coating material or where only a lower portion of the surface is to be coated, any inconsistencies from a normal good coating can be detected in precisely the same way as described for the beer cans above, using a light source of appropriate wavelength. Coatings inside hollow tubular containers which are open at both ends may be similarly monitored either by using the conveyor as a base to close one end of the container, or by placing the divergent light source at one end and the detector array at the other end, or other ends in the case of e.g. a Y-piece.

Coatings which can be monitored in this manner include not only the thin layers applied to beer cans as described above, but may also include much thicker deposits which similarly reflect light to a different extent from surface areas having no deposit.

What we claim is:

1.      Apparatus for detecting flaws in coatings on internal surfaces of moving open-mouthed containers, comprising means to detect the presence of a container in a predetermined testing position; a light source to illuminate the internal coating when the container is in the testing position, with light comprising at least one wavelength which is reflected from a coated surface to a different extent than from an uncoated surface; an array of photosensitive devices positioned to receive light reflected out of the container through the open mouth thereof and to give an analogue signal in response to light thus received by each device; and processing means activated by the detecting means to scan the analogue signals from the photosensitive devices when a container is in the testing position, to compare the values of those analogue signals individually with predetermined values, and to give an output signal dependent on the comparison thereby obtained.

2.      Apparatus as claimed in claim 1 wherein the means for detecting the presence of a container in the testing position consists essentially of an optical system comprising a light beam traversing the path of the container and a detector for the light beam which provides an electrical signal which changes when the light beam is broken.

3.      Apparatus as claimed in claim 1 or claim 2 wherein the source comprises one or more light-emitting devices located centrally with respect to the testing position and emitting a divergent beam.

4.      Apparatus as claimed in any one of the preceding claims wherein the source is a laser having means to provide a divergent beam.

5.      Apparatus as claimed in any one of the preceding claims wherein the radiation emitted by the source is of wavelength less than 5 μm and wherein the photosensitive
devices are photosemiconductors.

6.      Apparatus as claimed in any one of claims 1-4,
wherein the radiation emitted by the source is of wave-
length greater than 5 μm and wherein the photosensitive
devices are pyroelectric devices.

7.      Apparatus as claimed in any one of the preceding
claims wherein the array of photosensitive devices
covers a circular area, and the light source is mounted
in the centre of the circular array.

8.      Apparatus as claimed in any one of the preceding
claims, wherein both the array of photosensitive devices
and the light source are moveable in respect of their
distance from the testing position.

9.      Apparatus as claimed in any one of the preceding
claims wherein the processing means comprises a multiplexer arranged to sample in turn each analogue signal
and to provide a pulsed output signal wherein the pulses
correspond to specific analogue signals whose originating
devices are identifiable by the processing means.

10.     Apparatus as claimed in any one of the preceding
claims, wherein the predetermined values with which the
analogue signals from the photomultiplexer are compared,
are recalibrated by passing through the reading position
at least one reference container whose coating is known
to be acceptable.

11.     Apparatus as claimed in claim 10, having means
to average signals derived from passing a plurality of
reference containers through the reading position during
recalibration.

D B HALL
AGENT FOR THE APPLICANTS

## DOCUMENTS CONSIDERED TO BE RELEVANT

| Category | Citation of document with indication, where appropriate, of relevant passages | Relevant to claim |
|---|---|---|
| | US - A - 4 026 414 (B. ELLINGER)<br>* Columns 2-4; figures 1-3,8 *<br>-- | 1,3,7, 9 |
| | US - A - 4 165 939 (A. WOODROW et al.)<br>* Columns 4-5; figures 3,12 *<br>-- | 1,4,10 |
| | PATENT ABSTRACTS OF JAPAN, vol. 4, nr. 86, 20th June 1980, page 161 P16<br>& JP - A - 55 51341 (DAIWA SEIKAN)<br>* Whole document *<br>-- | 1,10 |
| A | GB - A - 1 207 489 (NORTH ATLANTIC RESEARCH PRODUCTS)<br>* Pages 1-2; figure 1 *<br>-- | 1 |
| A | US - A - 3 956 629 (T. GOMM et al.)<br>* Columns 2-3; figures 1,3 *<br>---- | 1 |

**CLASSIFICATION OF THE APPLICATION (Int. Cl.³)**

G 01 N 21/88

**TECHNICAL FIELDS SEARCHED (Int. Cl.³)**

G 01 N 21/88
G 01 B 11/24
G 01 B 11/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-12-1981 | BOEHM |

EPO Form 1503.1   06.78